# EUROPÄISCHE PATENTSCHRIFT

(11) **EP 0 445 233 B1**
(45) Veröffentlichungstag und Bekanntmachung des Hinweises auf die Patenterteilung: **09.03.1994**
(21) Anmeldenummer: 90902152.9
(22) Anmeldetag: 01.02.1990
(51) Int. Cl.: G09B 25/04, G09B 1/34, A63H 33/04

(54) **DEMONSTRATIONSVORRICHTUNG**
DEMONSTRATION DEVICE
DISPOSITIF DE DEMONSTRATION

(30) Priorität: 09.03.1989 DE 8902865 U
(43) Veröffentlichungstag der Anmeldung: 11.09.1991
(73) Patentinhaber: SCHMITZ, Karl-Werner, D-53804 Much-Wellerscheid (DE); BERGFELDER, Manfred, D-51061 Köln (DE)
(72) Erfinder: SCHMITZ, Karl-Werner, D-53804 Much-Wellerscheid (DE); BERGFELDER, Manfred, D-51061 Köln (DE)
(74) Vertreter: Bauer, Wulf, Dr.
(86) Internationale Anmeldenummer: DE9000064
(87) Internationale Veröffentlichungsnummer: WO9010923

(56) Entgegenhaltungen:
- DE-A- 2 032 466
- FR-A- 2 220 167
- FR-A- 2 414 761
- GB-A- 2 049 447

## Beschreibung

Die Erfindung betrifft eine Demonstrationsvorrichtung. Derartige Vorrichtungen, siehe z.B. DE-A-2 032 466, haben einerseits einen Spielzweck, sie sollen den Spielenden zur Handhabung anregen, gerne erfaßt und benutzt werden. Andererseits sollen sie aber auch eine Aussage, insbesondere einen Lehrinhalt, vermitteln. Dieser ergibt sich aus der besonderen Gestaltung der Demonstrationsvorrichtung und kann innerhalb eines gewissen Bereiches unterschiedlicher Lehrinhalte, die jedoch ähnliche Zielsetzung haben, variiert werden.

Beim Spiel mit der Demonstrationsvorrichtung soll der Lehrinhalt möglichst klar hervortreten, ohne aber zunächst Hauptziel zu sein. Das Spiel soll dazu dienen, den Lehrinhalt und damit die Aussage auf andere Weise und möglicherweise besser erfaßlich darstellen zu können, als dies durch eine sprachliche Erläuterung, eine schriftliche Beschreibung oder eine Zeichnung, die jeweils denselben Lehrinhalt betreffen, möglich ist. Wenn der Lehrende die Demonstrationsvorrichtung benutzt, kann er die mit dieser verbundenen Aussagen dem Lernenden besser verständlich machen. Dabei erleichtert die in der Hand des Lehrenden befindliche Demonstrationsvorrichtung den Vortrag, das Spiel zwingt den Vortragenden, die Einzelteile oder einzelnen Elemente der Demonstrationsvorrichtung anzusprechen, so daß der zu vermittelnde Inhalt ins Gespräch kommt, insofern wirkt die Demonstrationsvorrichtung auch als Vortragsplan. Wenn der Lernende die Demonstrationsvorrichtung benutzt, kann er die Aussage körperlich erfassen, wodurch der Lerneffekt verstärkt wird. Eine Demonstrationsvorrichtung der eingangs genannten Art macht sich insofern die Erfahrung zunutze, daß eine ausschließlich durch die Sprache erfolgende Vermittlung des Lehrinhaltes, eine optische Vermittlung des Lehrinhaltes oder eine Kombination sprachlicher und optischer Wissensvermittlung eine geringere Wahrscheinlichkeit haben, vom Lernenden dauerhaft aufgenommen zu werden, als eine körperlich mit den Händen begriffene, in ein Spiel gekleidete Aussage, also haptisches Lernen.

Hiervon ausgehend hat sich die Erfindung die Aufgabe gestellt, eine Demonstrationsvorrichtung in Form eines Hauses anzugeben, mit dem jemand, der ein Haus bauen oder erwerben möchte, die Notwendigkeit einer Absicherung insbesondere durch Versicherungen erklärt und plastisch vor Augen geführt werden kann.

Diese Aufgabe wird durch eine Demonstrationsvorrichtung in Form eines eingeschossigen Hauses mit einem Grundkörper, einem Dach und einer Bodenplatte gelöst, wobei der Grundkörper sich aus mehreren prismatischen Bausteinen zusammensetzt, deren Höhe der Höhe des Geschosses entspricht, die eine längliche, schmale Unterseite haben und die nebeneinander gestellt den im wesentlichen quaderförmigen Grundkörper mit der Grundfläche des Hauses bilden, das Dach ein Baustein mit schrägen Dachflächen und einer Unterfläche ist, die zumindest ebenso groß ist wie die Grundfläche und die Bodenplatte (a) im Normalzustand eine Auflagefläche für die Bausteine bildet, welche zumindest ebenso groß ist wie die Grundfläche des Grundkörpers, (b) im Normalzustand aus mindestens zwei prismatischen Teilstücken zusanmengesetzt ist, die Schrägflächen aufweisen und an Berührungsflächen aneinanderliegen und (c) zwei Teilstücke der Bodenplatte aus dem Normalzustand in entgegengesetzte Richtungen voneinander wegbewegt werden können, wodurch die Auflagefläche beeinflußt wird und die Bausteine kippen.

Die Geschoßbausteine, von denen mindestens drei, vorzugsweise fünf vorgesehen sind, symbolisieren die für den Bau bzw. Kauf eines Hauses notwendigen Voraussetzungen, wie beispielsweise laufendes Einkommen, Hypotheken und/oder Darlehen einer Bausparkasse, Arbeitgeberdarlehen usw. Der Dachbaustein liegt auf den nebeneinander gestellten und den im wesentlichen kubischen Grundkörper des Hauses bildenden Geschoßbausteinen auf. Die Bodenplatte besteht aus mehreren Teilstücken, es sind mindestens zwei Teilstücke vorgesehen. Wie die Bausteine des Grundkörpers sind auch die Teilstücke der Bodenplatte prismatisch. Unter dem Ausdruck prismatisch wird ein Körper in Gestalt eines geraden Prismas verstanden, also ein Körper mit einer regelmäßigen Grundfläche, konstanten Querschnittsflächen und rechtwinklig zur Grundfläche verlaufenden Wänden. Im Normalzustand bilden die Teilstücke der Bodenplatte eine Auflagefläche für die nebeneinander gestellten und den Grundkörper des Hauses bildenden Geschoßbausteine. Zwei Teilstücke können aus dem Normalzustand in entgegengesetzte Richtungen voneinanderweg bewegt werden, hierdurch wird die Position der Auflagefläche beeinflußt und kippen die Bausteine um.

Das Auseinanderziehen von zwei der zumindest zwei Teilstücke der Bodenplatte symbolisiert Schicksalsschläge im Leben des Bauherrn oder Hauskäufers. Der Bauherr/Hauskäufer soll erkennen und erfahren, daß das Fundament, auf dem das Haus gebaut ist, also die Bodenplatte, stabil und abgesichert sein sollte, damit das darauf errichtete Haus stabil ist und auch bei Erschütterungen und Schicksalsschlägen nicht ins Wanken kommt.

Das dominosteinartige Umkippen der einzelnen Bausteine des Grundkörpers und das dabei erfolgte Mitreißen des Daches kann noch durch eine günstige Gestaltung der Standfläche der einzelnen Bausteine und durch eine möglichst geringe Reibung an den Berührungsflächen der nebeneinander liegenden Bausteine und der Unterfläche des Dachbausteins verbessert werden.

Bei der Demonstration werden zunächst die einzelnen Geschoßbausteine erläutert, also ausgeführt, daß man für den Bau eines Hauses Bausteine braucht, die dann zusanmengefügt den eigentlichen Körper des Hauses bilden. Diese Bausteine können unterschiedlich beschriftet sein, beispielsweise mit dem Wort "Hypothek", "Darlehen", "Einkommen", "Arbeitgeberdarlehen" usw. Sie können aber auch in einer anderen Ausführung anders beschriftet sein, beispielsweise unter Bezug auf diejenigen Vermittler und Gewerke, die für einen Hausbau bzw. Hauserwerb notwendig sind, beispielsweise Handwerker oder Bauträger, Makler usw. In beiden Fällen soll dem Bau- bzw. Kaufwilligen dargestellt werden, daß einzelne Bausteine, die für das zukünftige Haus benötigt werden, wegfallen oder unsicher (wacklig) werden können. Dies kann dadurch geschehen, daß das eigene Einkommen wegfällt, daß ein Arbeitgeberdarlehen in Frage gestellt wird, weil das Arbeitsverhältnis nicht fortgesetzt werden kann, daß die Baufirma bzw. der Bauträger in Konkurs fällt usw. Erläutert werden diese Probleme dadurch, daß zwei Teilstücke der Bodenplatte voneinander weggezogen werden, wodurch sich die Auflagefläche für die Bausteine so ändert, daß sie umfallen. Damit stürzt auch das Dach ein.

In einer anderen Ausführung können auch die Teilstücke der Bodenplatte anstelle der Bausteine des Grundkörpers mit den Beschriftungen versehen sein. Hierzu kann die Bodenplatte in diejenige Anzahl von Teilstücken unterteilt werden, die man benötigt, um die einzelnen Beschriftungen unterzubringen.

Als vorteilhaft hat es sich in einer Weiterbildung erwiesen, die Unterseite der einzelnen Geschoßbausteine uneben auszubilden und dabei die eigentliche Standfläche möglichst klein zu halten, wodurch die auf die Standfläche gestellten Geschoßbausteine labil stehen und bei kleinsten Erschütterungen zum Umfallen gebracht werden können. Dabei wird angestrebt, die Abweichung von der eigentlichen Quaderform so gering wie möglich zu machen, damit ein unvoreingenommener Betrachter die Abweichung von einer ebenen Unterfläche praktisch nicht erkennt. Die Unterfläche kann beispielsweise teilzylindrisch mit Abplattung im Mittelbereich oder deichartig abgeschrägt ausgeführt sein.

In einer anderen Weiterbildung sind die großen Seitenflächen der Bausteine, die beim Zusammensetzen zum Grundkörper aneinanderliegen, möglichst glatt ausgebildet, so daß der Reibungskoeffizient zwischen benachbarten Bausteinen möglichst gering ist. Dies bewirkt, daß die Bausteine möglichst wenig aneinander haften und die beim dominostein-ähnlichen Kippen benachbarter Bausteine zwangsweise auftretende Gleitreibung den Kippvorgang möglichst wenig behindert.

Als sehr vorteilhaft hat es sich in einer Weiterbildung erwiesen, abstoßende Mittel, insbesondere Permanentmagnete gleicher Polarität an übersinstimmenden und beim Zusammensetzen gegenüberliegenden Orten der Geschoßbausteine verdeckt anzuordnen. Diese bewirken eine nur geringfügige Abstoßungskraft und reichen für sich allein nicht aus, die Geschoßbausteine soweit voneinander zu entfernen, daß dies merklich sichtbar wäre und zu einem Kippen der Bausteine führte. Vielmehr soll durch die Permanentmagnete im wesentlichen zumindest der Reibungsverlust ausgeglichen werden.

Die Bodenplatte hat im zusammengesetzten Zustand vorzugsweise eine rechteckförmige und insbesondere eine quadratische Grundfläche. Ihre Höhe beträgt in einer bevorzugten Ausführung ca. 10 mm. Die Auflagefläche ist im Normalzustand der Bodenplatte entweder eben oder besteht im wesentlichen aus zwei V-förmig in sehr flachem Winkel zueinander geneigten Teilflächen. Im ersten Fall sind die Bausteine des Grundkörpers quaderförmig, im letzten Fall sind die Bausteine prismatisch und haben eine schräg verlaufende Unterseite, deren Winkelstellung dem Schrägverlauf der Auflagefläche entspricht bzw. eine V-förmige Schrägung hat.

Die Bodenplatte hat Abmessungen, die zumindest den Abmessungen der Grundfläche des Grundkörpers des Hauses entsprechen. Vorzugsweise ist die Bodenplatte jedoch größer als der Grundkörper und steht allseitig gegenüber diesem vor. Vorzugsweise hat die Bodenplatte dieselben Abmessungen wie die Basisfläche des Dachbausteins.

Die Oberfläche der Bodenplatte kann geringfügig wellig ausgebildet sein, um die gewünschte labile Abstützung der Bausteine zu verbessern oder auch nur zu bewirken. Weiterhin können in der Bodenplatte unsichtbar Permanentmagnete angeordnet sein, denen entsprechende Permanentmagnete gleicher Polarität oberhalb der Standfläche jedes Bausteins zugeordnet sind, so daß die Standfestigkeit der einzelnen Bausteine hierdurch geschwächt wird, ohne daß dies zunächst erkennbar ist.

In einer vorzugsweisen Ausbildung hat das Dach die Form eines Spitzdachs mit geringer Neigung und dadurch mit dem im wesentlichen quadratischen Grundkörper ein ästhetisch gutes Aussehen. Das Haus ist aus einem geeigneten Material, beispielsweise Holz, Kunststoff oder Metall gefertigt. Die Bausteine haben in vorteilhafter Weiterbildung an einigen der zur Außenseite weisenden Flächen Abbildungen eines Fensters, einer Tür usw., um den Eindruck eines Hauses zu unterstützen. Diese Elemente können vorteilhafterweise so angeordnet sein, daß sie jeweils zwangsweise zusammengesetzt werden müssen, um ein komplettes Fenster bzw. eine komplette Tür auszubilden. Erfolgt dies an den schmalen Stirnseiten, so wird erreicht, daß die Bausteine in einer festen, vorgegebenen Anordnung nebeneinander geschichtet werden müssen, weil sich nur dann das tatsächliche Bild ergibt, bei irgendwie gearteter Fehlanordnung aber das gewünschte Bild nicht auftritt. Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: eine perspektivische Darstellung des Hauses,
- Fig. 2: eine Frontansicht des Hauses gemäß Fig. 1 in einem Zustand teilweise auseinandergezogener Teilstücke der Bodenplatte zur Erläuterung des Kippens der Bausteine,
- Fig. 3: eine Darstellung entsprechend Fig. 2 eines zweiten Ausführungsbeispiels mit zweiteiliger Bodenplatte,
- Fig. 4: eine Frontansicht entsprechend Fig. 3 einer Bodenplatte bestehend aus zwei keilförmigen Teilstücken und
- Fig. 5: einen Schnitt durch zwei benachbarte Geschoßbausteine und ein Teilstück der Bodenplatte bei einer Schnittebene, die parallel zur Frontseite (entsprechend Fig. 2) verläuft.

Die Demonstrationsvorrichtung in Form eines eingeschossigen Hauses (Bungalow) besteht aus insgesamt fünf quaderförmigen, gleichgroßen Bausteinen 20 bis 24, die gemeinsam einen Grundkörper 26 bilden, aus einem Dachbaustein 28 und einer Bodenplatte 30. Im gezeigten Ausführungsbeispiel haben die Geschoßbausteine 20 bis 24 jeweils eine Standfläche 42 mit den Maßen Breite 1,8 cm und Länge 9 cm, die Höhe der Bausteine 20 bis 24 beträgt 6 cm. Die Bausteine 20 bis 24 sind aus einem Metall, beispielsweise Aluminium, gefertigt, sie können aber auch aus Holz, aus Kunststoff oder dergleich hergestellt sein. Sie berühren sich mit ihren größten Flächen, den Seitenflächen 34. Zusammengesetzt ergeben sie den Grundkörper 26 mit einer quadratischen Grundfläche von 9 x 9 cm und der angegebenen Höhe von 6 cm. Die Höhe der Bausteine 20 bis 24 entspricht der Höhe eines Geschosses eines Hauses nach der erfindungsgemäßen Demonstrationsvorrichtung.

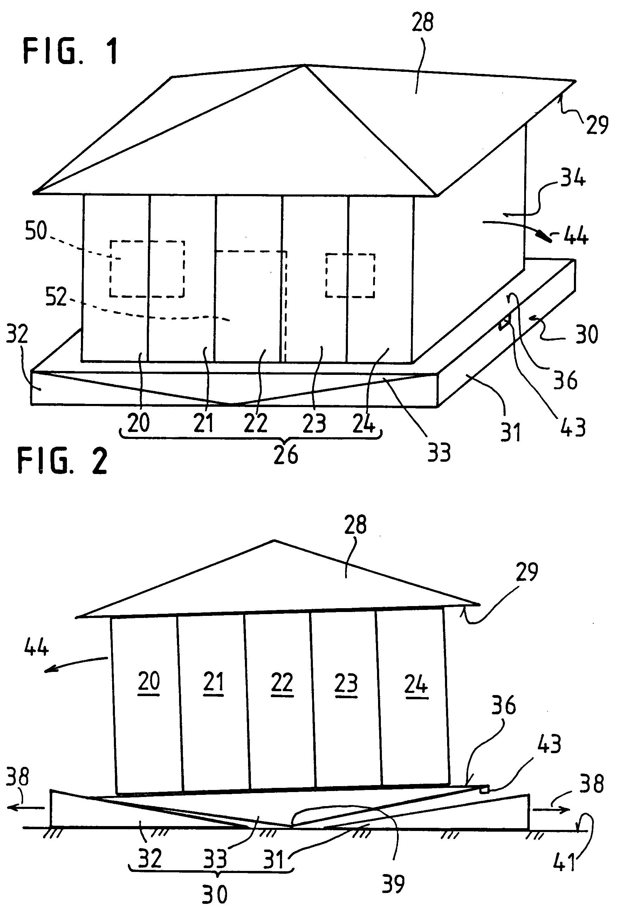

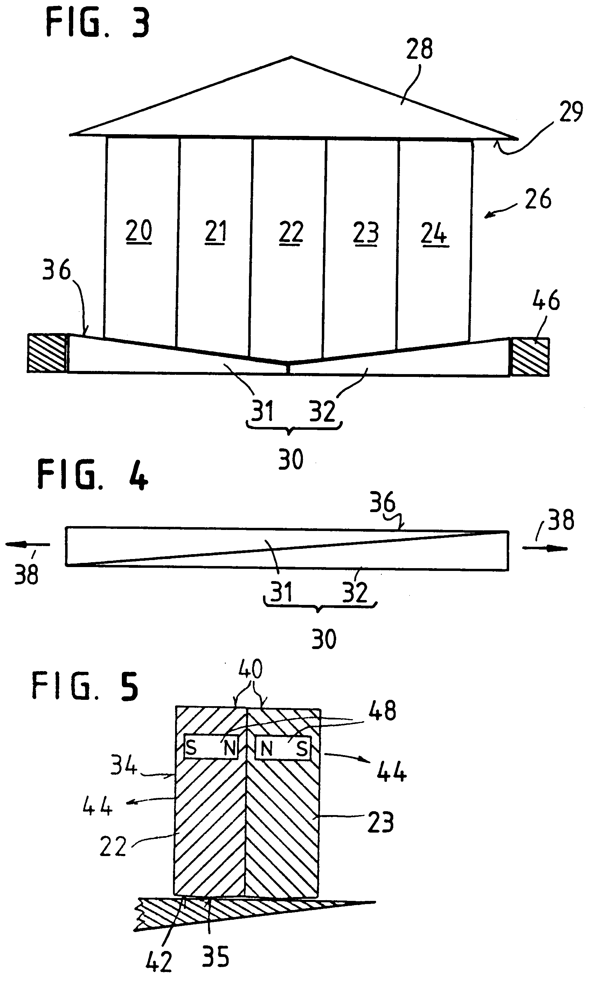

Der Dachbaustein 28 hat die Form einer flachen, vierseitigen Pyramide mit quadratischer Basisfläche 29, die die Abmessungen 11 x 11 cm hat. Die Basisfläche steht allseitig 1 cm gegenüber der Grundfläche des Grundkörpers 26 über. Die Bodenplatte 30 hat dasselbe quadratische Format wie die Basisfläche 29 des Dachbausteins 28. Sie ist einige Millimeter, im Ausführungsbeispiel der Figuren 1 und 2 ca. 10 mm hoch. Sie ist vorzugsweise aus demselben Material wie die Bausteine 20 bis 24 und 28 gefertigt. Im Ausführungsbeispiel nach den Figuren 1 und 2 sowie im Ausführungsbeispiel nach der Figur 4 ist die Bodenplatte 30 im Normalzustand ein Kubus mit quadratischer Grundfläche. Im Ausführungsbeispiel nach den Figuren 1 und 2 besteht die Bodenplatte aus drei Teilstücken 31, 32 und 33. Die beiden baugleichen Teilstücke 31 und 32 haben Keilform, ihre Grundfläche entspricht der halben Fläche der Bodenplatte 30. Ihre Ouerschnittsflächen sind rechteckige Dreiecke. Das dritte Teilstücke 33 hat das Profil eines gleichschenkligen Dreiecks und bildet mit seiner Oberseite die gesamte Auflagefläche 36 der Bodenplatte 30 aus. Die beiden gleichgroßen spitzen Winkel im Teilstück 33 und der jeweils spitze Winkel in den Teilstücken 31 und 32 sind gleich groß. Das Teilstück 33 kann man sich zusammengesetzt denken aus zwei Teilstücken 31 bzw. 32, die an ihren schmalen Kathetenflächen zusammengesetzt sind.

Entfernt man die beiden Teilstücke 31, 32 in entgegengesetzten Richtungen voneinander, wie dies durch die Pfeile 38 in Fig. 2 symbolisiert ist, so geht die für die Abstützung des dritten Teilstücks notwendige Basis zunehmend verloren. Das dritte Teilstück stützt sich nur mit einer unteren Kante auf einer Basis 41, beispielsweise einer Tischoberfläche, ab. Werden die beiden Teilstücke im Sinne der Pfeile 38 nach außen gezogen, so kippt das Teilstück 33 zu derjenigen Seite, auf der das Übergewicht ist, in jedem Fall befindet sich das Teilstück 33 mit darauf befindlichem Grundkörper und Dach in einem labilen Zustand, so daß es kippen muß. Durch die zwangsweise erfolgende Schräglage der Auflagefläche 36 kippen die Bausteine 20 bis 25 des Geschoßkörpers 26 im Sinne des Pfeils 44 und stürzt damit das gesamte Haus einschließlich des Dachbausteins 28 ein.

Im Ausführungsbeispiel nach den Figuren 1 und 2 ist noch eine vorteilhafte Weiterbildung, die jedoch nicht notwendig, ist, eingezeichnet: Im Bereich der spitzen Kanten des Teilstücks 33 springt nach unten ein Führungsstück vor, das im gezeichneten Ausführungsbeispiel ein kurzer Ansatz ist, aber auch ein länglicher, in der Zeichenebene verlaufender Vorsprung sein kann, der bis zur unteren Kante 39 flach ausläuft. Ihm entspricht eine nicht gezeigte Nut in der Oberfläche der beiden Teilstücke 31 und 32. Im Normalzustand greift das Führungsstück in die Nut ein, wodurch zugleich eine präzise Zuordnung der Teilstücke 31, 32 und 33 gegeben ist. Beim Auseinanderziehen der Teilstücke 31, 32 im Sinne der Pfeile 38 bewirken Führungsstück 43 und Nut eine gewisse Zwangsführung und vermeiden ein Auseinanderziehen in schräge Richtung, also in Abweichung von der Zeichenebene der Figur 2.

Im Ausführungsbeispiel nach Fig. 3 besteht die Bodenplatte 30 aus zwei baugleichen Teilstücken 31, 32, die prismatisch sind und die Grundfläche eines Keilstumpfes, in geänderter Ausführung auch eines Keiles haben. Dadurch ist die Auflagefläche 36 nicht eben, sondern besteht aus zwei gleich großen Teilflächen, die in einem stumpfen Winkel, der sich von 180 Grad nur um wenige Grad unterscheidet, zueinander geneigt stehen. Insgesamt wird dadurch die aus Figur 3 ersichtliche, flache Rinne zwischen zwei pultförmigen Teilstücken 31, 32 ausgebildet. Die Unterseite 42 der einzelnen Bausteine 20 bis 25 ist dem Verlauf dieser flachen Rinne angepaßt, die Unterseiten stehen in einem Winkel, der dem Neigungswinkel der Auflagefläche 36 entspricht, so daß die Seitenflächen 34 der einzelnen Bausteine 20 bis 25 senkrecht stehen. Bei der ungeraden Anzahl von Bausteinen im Ausführungsbeispiel nach Fig. 3 hat der mittlere Baustein 23 eine Doppelschräge oder dachförmige Schräge entsprechend der Winkelgebung der flachen Rinne der Auflagefläche 36 der Bodenplatte 30.

Zieht man die beiden Bausteine 31, im Sinne der Pfeile 38 voneinander weg, so kommt es ebenfalls zu einem Umstürzen.

Die Bodenplatte 30 im Ausführungsbeispiel nach Fig. 4 ist im gezeigten Normalzustand ebenfalls quaderförmig, wie das Ausführungsbeispiel nach den Figuren 1 und 2. Im Gegensatz zu diesem besteht es jedoch nur aus zwei Teilstücken 31, 32, die baugleich sind und eine Grundfläche haben, die der Auflagefläche 36 entspricht. Die beiden Teilstücke 31, 32 sind baugleich, sie sind Prismen mit der Grundfläche eines rechtwinkligen Dreiecks.

In den Ausführungsbeispielen nach den Figuren 1 und 2 sowie der Figur 4 berühren sich die Teilstücke 31 bis 33 der Bodenplatte 30 im Normalzustand im Bereich ihrer Keilflächen, die keilförmigen Teilstücke sind in Gegenrichtung zueinander geschichtet. Im Gegensatz hierzu berühren sich die beiden Teilstücke 31, 32 im Ausführungsbeispiel nach Fig. 3 im Normalzustand nur auf einer sehr schmalen Stirnfläche am schmaleren Kegelstumpfende der beiden Teilstücke 31, 32.

In einer bevorzugten Weiterbildung wird vorgeschlagen, die Bodenplatte 30 durch einen rechteckförmigen Rahmen 46 zu ergänzen, der von oben über den Dachbaustein 28 auf das Haus aufgesetzt werden kann und die Bodenplatte 30 im Normalzustand so umfaßt, daß eine Separierung oder Trennung ihrer Teilstücke 31 bis 33 entlang der Pfeile 38 nicht möglich ist. Dieser Rahmen 36 kann eine Versicherung symbolisieren, die es verhindert, daß die Teilstücke der Bodenplatte separiert werden können. In einer vorzugsweisen Weiterbildung kann auf der Oberseite des Rahmens 46 ein Zaun, der das gesamte Haus umläuft, angeordnet sein, er ist nicht eingezeichnet.

Wie Fig. 5 zeigt, ist die Unterseite 42 der einzelnen Geschoßbausteine 20 bis 24 geringfügig uneben, im gezeigten Ausführungsbeispiel hat sie das Profil eines Deiches, sie setzt sich aus zwei im Winkel von 3° zur Horizontalen verlaufenden Schrägflächen und einer nur 2 mm breiten, mittigen Standfläche 35 zusammen. Hierdurch wird erreicht, daß die Bausteine 20 bis 24 möglichst einfach in Richtung der Pfeile 44, die quer zu ihren Seitenflächen 34 stehen, kippen können. Überhaupt ist die Konstruktion so ausgelegt, daß die in Art von fünf Dominosteinen abstandslos nebeneinander geschichteten Geschoßbausteine 20 bis 24 bei Erschütterungen relativ leicht im Sinne der Pfeile 44 umgekippt werden können. Um ein einfaches Kippen zu bewirken, sind die sich berührenden Seitenflächen 34 der Bausteine 20 bis 24 möglichst glatt ausgebildet und so ausgeführt, daß der Reibungskoeffizient benachbarter Seitenflächen 34 möglichst gering ist. Im Falle von Geschoßbausteinen 20 bis 24 aus Holz sind die Seitenflächen 34 lackiert, bei Bausteinen aus Aluminium sind sie glatt poliert, eloxiert oder dergleichen. Um darüberhinaus zu vermeiden, daß die Bausteine 20 bis 24 im zusammengesetzten Zustand des Grundkörpers 26 aneinander haften, beispielsweise durch Adhäsion, sind zusätzliche Maßnahmen getroffen, um das seitliche Fallen der einzelnen Bausteine 20 bis 24 noch zu erleichtern, jedenfalls die Reibungskraft zwischen beim Kippen an ihren Seitenflächen 34 aneinandergleitenden Bausteinen 20 bis 24 möglichst aufzuheben. Gemäß Fig. 5 sind von außen unsichtbar stabförmige Permanentmagnete 48 so in die Bausteine 20 bis 24 eingebettet, daß die Magnete 48 auf einer quer zur Seitenfläche 34 verlaufenden Linie liegen und sich gleiche Pole (N gleich Nordpol, S gleich Südpol) gegenüberliegen, so daß hier eine Abstoßung auftritt. Die abstoßende Kraft ist jedoch so gering, daß sie die Reibungskraft nur geringfügig überwiegt, auf jedenfall aber nicht bewirkt, daß die Bausteine gemäß Fig. 5 allein durch die magnetische Abstoßung auseinandergedrückt werden und kippen.

## Patentansprüche

1. Demonstrationsvorrichtung in Form eines eingeschossigen Hauses mit einem Grundkörper (26), einem Dach (28) und einer Bodenplatte (30), wobei der Grundkörper (26) sich aus mehreren, prismatischen Bausteinen (20 bis 24) zusammensetzt, deren Höhe der Höhe eines Geschosses entspricht, die jeweils eine längliche, schmale Unterseite (42) haben und die nebeneinandergestellt den Grundkörper (26) mit der Grundfläche des Hauses bilden, das Dach (28) ein Baustein mit schrägen Dachflächen und einer Unterfläche (29) ist, die zumindest ebenso groß ist wie die Grundfläche und die Bodenplatte (30)
a) im Normalzustand eine Auflagefläche (36) für die Bausteine (20 bis 24) bildet, welche zumindest ebenso groß ist wie die Grundfläche des Grundkörpers (26),
b) im Normalzustand aus mindestens zwei prismatischen Teilstücken (31 bis 33) zusammengesetzt ist, die Schrägflächen aufweisen und an Berührungsflächen aneinanderliegen und
c) aus dem Normalzustand in entgegengesetzte Richtungen (Pfeile 38) voneinander wegbewegt werden können, wodurch die Auflagefläche (36) beeinflußt wird und die Bausteine (20 bis 24) kippen.

2. Demonstrationsvorrichtung nach Anspruch 1, dadurch gekennzeichnet, daß die Bodenplatte (30) aus zwei pultförmigen (kegelstumpfförmigen) Teilstücken (31, 32) zusammengesetzt ist, die jeweils baugleich sind und deren Grundfläche der halben Auflagefläche (36) entspricht.

3. Demonstrationsvorrichtung nach Anspruch 1, dadurch gekennzeichnet, daß die Teilstücke (31 bis 33) der Bodenplatte (30) im Normalzustand einen quaderförmigen Körper, vorzugsweise mit quadratischer Grundfläche bilden.

4. Demonstrationsvorrichtung nach Anspruch 3, dadurch gekennzeichnet, daß die Bodenplatte (30) aus zwei baugleichen Teilstücken (31, 32) mit keilförmigen Bereichen zusammengesetzt ist.

5. Demonstrationsvorrichtung nach Anspruch 3 oder 4, dadurch gekennzeichnet, daß die Bodenplatte (30) aus drei Teilstücken (31 bis 33) zusammengesetzt ist, von denen das dritte Teilstück (33) mit seiner Oberseite die Auflagefläche (36) ausbildet und einen Ouerschnitt hat, der einem gleichschenkligen, stumpfen Dreieck entspricht.

6. Demonstrationsvorrichtung nach einem der Ansprüche 1 bis 5, gekennzeichnet durch einen die Bodenplatte (30) allseits umgreifenden, vorzugsweise gleich hohen Rahmen (46).

7. Demonstrationsvorrichtung nach einem der Ansprüche 1 bis 6, dadurch gekennzeichnet, daß die Unterseite (42) der Bausteine (20 bis 24) uneben und eine eigentliche Standfläche (32) möglichst klein ist, wobei die Unterseite möglichst nach unten teilzylindrisch oder angeschrägt verläuft.

8. Demonstrationsvorrichtung nach einem der Ansprüche 1 bis 7, dadurch gekennzeichnet, daß Seitenflächen (32) der Bausteine (20 bis 24), die beim Zusammensetzen zu dem Grundkörper (26) aneinanderliegen, glatt ausgebildet sind und möglichst einen geringen Reibungskoeffizienten gegeneinander haben.

9. Demonstrationsvorrichtung nach einem der Ansprüche 1 bis 8, dadurch gekennzeichnet, daß die Bodenplatte eine Höhe von 5 bis 10 mm hat und ihre Auflagefläche (36) allseits um einige Millimeter gegenüber der Grundfläche vorsteht.

10. Demonstrationsvorrichtung nach einem der Ansprüche 1 bis 9, dadurch gekennzeichnet, daß die Bodenplatte (30) eine wellige Oberfläche aufweist.

11. Demonstrationsvorrichtung nach einem der Ansprüche 1 bis 10, dadurch gekennzeichnet, daß abstoßende Mittel, vorzugsweise Permanentmagnete gleicher Polarität, an übereinstimmenden und beim Zusammensetzen der Bausteine (20 bis 24) gegenüberliegenden Orten in diesen Bausteinen (20 bis 24) angeordnet sind.

12. Demonstrationsvorrichtung nach einem der Ansprüche 1 bis 11, dadurch gekennzeichnet, daß der Dachbaustein (28) einstückig ist und das Dach vorzugsweise als Spitzdach mit quadratischer Grundfläche ausgeführt ist.

13. Demonstrationsvorrichtung nach einem der Ansprüche 1 bis 7, dadurch gekennzeichnet, daß die Bausteine eine Unterseite (42) mit einer Breite zwischen 1 und 3 cm und einer Länge von 5 und 12 cm haben und da die Höhe der Bausteine (20 bis 24) zwischen 5 und 12 cm liegt.

## Claims

1. Demonstration device in the form of a single-storey house comprising a body (26), a roof (28) and a base slab (30), whereby the body (26) is composed of a number of prism-shaped building blocks (20-24) whose height is equivalent to the height of the storey, each body building block (20-24) has an oblong, narrow lower side or base (42); when placed side by side, these blocks (20-24) form the body (26) with the area of the base of the house, the roof (28) is a building block with sloping roof surfaces and a base surface (29) whose area is at least as large as that of the base slab (30) of the house, and the base slab (29) (a) forms, in the normal state, a supporting surface (36) for the body building blocks (20-24) the area of which is at least as large as the base area of the body (26); (b) is composed in the normal state of at least two prism-shaped components (31-33) which have sloping surfaces and which touch one another at contact surfaces; and which (c) can be moved away from one another (arrows 38), out of their normal state positions, having an effect on the supporting surface (36) and causing the body building blocks (20-24) to fall over.

2. Demonstration device as claimed in Claim 1, characterised by the fact that the base slab (30) consists of two lectern-shaped (blunt wedges) components (31, 32) which are identical in shape and whose base area corresponds to one half that of the supporting surface (36).

3. Demonstration device as claimed in Claim 1, characterised by the fact that the components (31-33) of the base slab (30) form in the normal state a cuboid body, preferably with a square base.

4. Demonstration device as claimed in Claim 3, characterised by the fact that the base slab (30) consists of two identical components (31, 32) with wedge-shaped areas.

5. Demonstration device as claimed in Claims 3 or 4, characterised by the fact that the base slab (30) is made up of three components (31-33) and that the upper surface of the third of these components (33) forms the supporting surface (36) and that its cross-section has the form of an obtuse isosceles triangle.

6. Demonstration device as claimed in any of Claims 1 to 5, characterised by the fact that the base slab (30) is provided with a frame (46) surrounding it on all sides and preferably of the same height all round.

7. Demonstration device as claimed in any of Claims 1 to 6, characterised by the fact that the bases (42) of the body building blocks (20-24) are uneven and that their actual supporting surface (32) is as small as possible; if possible the base should form a downward-facing cylindrical section or angled surface.

8. Demonstration device as claimed in any of Claims 1 to 7, characterised by the fact that the side surfaces (32) of the body building blocks (20-24) lie against one another and are smooth and that their coefficient of friction with one another is as low as possible.

9. Demonstration device as claimed in any of Claims 1 to 8, characterised by the fact that the base slab (30) has a thickness of from 5 to 10 mm and that its supporting surface (36) projects a few millimetres from the base area of the house body on all sides.

10. Demonstration device as claimed in any of Claims 1 to 9, characterised by the fact that the base slab (30) has a corrugated surface.

11. Demonstration device as claimed in any of Claims 1 to 10, characterised by the fact that repulsive means, preferably permanent magnets of the same polarity, are provided in corresponding locations in the body building blocks (20-24) so that they lie opposite to one another when the body building blocks (20-24) are assembled.

12. Demonstration device as claimed in any of Claims 1 to 11, characterised by the fact that the roof building block (28) comprises a single piece and that the roof is preferably in the form of a pointed roof with a square base.

13. Demonstration device as claimed in any of Claims 1 to 7, characterised by the fact that the body building blocks (20-24) have a base (42) with a width between 1 and 3 cm and a length between 5 and 12 cm and that the height of the body building blocks (20-24) is between 5 and 12 cm.

## Revendications

1. Dispositif de démonstration sous la forme d'une maison à un étage comprenant un corps (26), un toit (28) et une plaque de base (30), le corps (26) étant composé d'un nombre de composantes (20 à 24) prismatiques dont la hauteur est équivalente à la hauteur de l'étage, ayant respectivement un côté inférieur (42) oblong et étroit et, placée côte à côte, formant le corps (26) avec la base de la maison, le toit (28) étant une composante avec surfaces de toit inclinées et une surface inférieure (29) étant au moins aussi grande que la surface de base et la plaque de base (30)
a) formant, à l'état normal, une surface portante (36) pour les composantes (20 à 24) dont la surface est au moins aussi importante que la surface inférieure du corps (26),
b) étant composée, à l'état normal, d'au moins deux éléments prismatiques (31 à 33) à surfaces inclinées et se touchant l'un l'autre par des surfaces de contact,
c) pouvant être séparés l'un de l'un autre, hors de leur état normal, dans des directions opposées (flèche 38) ayant un effet sur la surface portante (36) et provoquant la chute des composantes (20 à 24) du corps.

2. Dispositif de démonstration selon la revendication 1, caractérisé en ce que la plaque de base (30) est composée de deux éléments (31, 32) en forme de pupitre (tronconiques) respectivement identiques et dont la surface de base correspond à la moitié de la surface portante (36).

3. Dispositif de démonstration selon la revendication 1, caractérisé en ce que les éléments (31 à 33) de la plaque de base (30) forment à l'état normal un corps en forme de parallépipède, de préférence avec une surface de base quadratique.

4. Dispositif de démonstration selon la revendication 3, caractérisé en ce que la plaque de base (30) est composée de deux éléments (31, 32) identiques avec zones en forme de coin.

5. Dispositif de démonstration selon la revendication 3 ou 4, caractérisé en ce que la plaque de base (30) est composée de trois éléments (31 à 33), la surface supérieure du troisième élément (33) formant la surface portante (36) et ayant une section correspondant à un triangle isocèle obtus.

6. Dispositif de démonstration selon l'une des revendications 1 à 5, caractérisé en ce qu'il existe un cadre (46), de préférence de même hauteur, entourant de tout côté la plaque de base (30).

7. Dispositif de démonstration selon l'une des revendications 1 à 6, caractérisé en ce que le côté inférieur (42) des composantes (20 à 24) est inégal et que la surface d'appui (32) à proprement parler est la plus petite possible, le côté inférieur (42) présentant vers le bas une section cylindrique ou une surface biseautée.

8. Dispositif de démonstration selon l'une des revendications 1 à 7, caractérisé en ce que les surfaces latérales (32) des composantes (20 à 24), placées les unes contre les autres lors de l'assemblage du corps (26), ont une forme lisse et des coefficients de friction entre elles aussi réduits que possible.

9. Dispositif de démonstration selon l'une des revendications 1 à 8, caractérisé en ce que la plaque de base a une hauteur de 5 à 10 mm et que sa surface portante (36) dépasse de tout côté la surface de base de quelques millimètres.

10. Dispositif de démonstration selon l'une des revendications 1 à 9, caractérisé en ce que la plaque de base (30) présente une surface supérieure ondulée.

11. Dispositif de démonstration selon l'une des revendications 1 à 10, caractérisé en ce que les moyens répulsifs, de préférence des aimants permanents de même polarité, sont placés dans ces composantes (20 à 24) à des emplacements concordants et opposés lors de l'assemblage des composantes (20 à 24).

12. Dispositif de démonstration selon l'une des revendications 1 à 11, caractérisé en ce que la composante du toit (28) est d'une seule pièce et que le toit est de préférence conçu comme un toit en pointe à base quadratique.

13. Dispositif de démonstration selon l'une des revendications 1 à 7, caractérisé en ce que les composantes ont un côté inférieur ayant une largeur de 1 à 3 cm et une longueur de 5 à 12 cm et que la hauteur des composantes (20 à 24) est entre 5 et 12 cm.
